# FASCICULE DE BREVET EUROPEEN

(11) **EP 4 017 803 B1**
(45) Date de publication et mention de la délivrance du brevet: **28.02.2024**
(21) Numéro de dépôt: 20757332.0
(22) Date de dépôt: 18.08.2020
(51) Int. Cl.: B64D 11/06

(54) **AGENCEMENT DE SIÈGES PASSAGERS, NOTAMMENT POUR AÉRONEFS**
PASSAGIERSITZANORDNUNG, INSBESONDERE FÜR FLUGZEUGE
PASSENGER SEAT ARRANGEMENT, IN PARTICULAR FOR AIRCRAFT

(30) Priorité: 19.08.2019 FR 1909279
(43) Date de publication de la demande: 29.06.2022
(73) Titulaire: Safran Seats, 78370 Plaisir (FR)
(72) Inventeur: CAUX, Valentin, 77550 MOISSY CRAMAYEL (FR); ANTILLON, Teresa Del Carmen, 77550 MOISSY CRAMAYEL (FR); JALMAR, Marguerite, 77550 MOISSY CRAMAYEL (FR); CHAVARRIA, Daniel, 77550 MOISSY CRAMAYEL (FR)
(74) Mandataire: Casalonga
(86) Numéro de dépôt international: PCT/EP2020/073072
(87) Numéro de publication internationale: WO 2021/032723

(56) Documents cités:
- WO-A1-2013/063599
- WO-A1-2014/049362
- WO-A1-2016/018731
- WO-A1-2017/083704
- WO-A2-2015/061688

## Description

### Domaine technique de l'invention

La présente invention concerne le domaine de l'agencement de sièges, et notamment l'agencement de sièges inclinables adaptés pour les voyages de longues distances.

En particulier, l'invention concerne l'agencement de sièges d'un aéronef, par exemple destinés à la classe dite « affaires » ou « business » en termes anglo-saxons.

On notera que l'agencement des sièges pourrait également être destiné à d'autres moyens de transport, tels que par exemple les transports ferroviaires, ou encore les espaces restreints.

### Etat de la technique antérieur

Classiquement, les sièges sont mobiles entre une position assise, dans laquelle le dossier est incliné par rapport à l'assise et une position allongée, dans laquelle le dossier et l'assise sont sensiblement dans le même plan. Une position intermédiaire peut également être prévue.

Toutefois, de tels sièges sont particulièrement encombrants et réduisent considérablement l'espace disponible pour les passagers.

On peut se référer à cet égard au document EP 3 127 811 (Optimares) qui divulgue un ensemble de sièges inclinables pour avion, chaque siège étant incliné par rapport au siège adjacent de sorte que lorsque les deux sièges sont en position allongée, un espace entre eux subsiste afin que le passager puisse accéder au siège à proximité de la fenêtre sans dérange le passager situé sur le siège à proximité du couloir.

Toutefois, un tel espace est très petit et ne permet pas d'accéder au siège fenêtre de manière confortable.

WO 2014/049362 A1 divulgue un agencement de sièges passagers d'avion dans une cabine d'avion, comprenant une pluralité de paires d'unités de siège, les paires d'unités de siège étant situées directement l'une derrière l'autre, et chaque unité de siège ayant un axe longitudinal. Chaque paire d'unités de siège comprend une unité de siège d'allée et une unité de siège non d'allée. Les axes longitudinaux des unités de siège non d'allée sont agencés en ligne l'un avec l'autre, et l'axe longitudinal de l'unité de siège d'allée de chaque paire d'unités de siège est incliné de façon à constituer un chemin d'accès pour passagers reliant l'unité de siège non d'allée d'une paire, avec l'allée.

WO 2017/083704 A1 divulgue un agencement de siège passager comprenant des appariements de premier et second sièges latéralement adjacents, les premier et second sièges étant positionnés selon différents angles par rapport à un axe d'aéronef longitudinal, et les premier et second sièges s'inclinant à différentes hauteurs verticales de telle sorte qu'une surface de lit du premier siège dans une configuration de disposition plate peut chevaucher une partie d'une surface de lit du second siège dans une configuration de disposition plate pour maximiser la densité d'assise.

Il existe un besoin d'améliorer davantage le confort des utilisateurs, sans augmenter l'encombrement d'une rangée de sièges.

### Exposé de l'invention

La présente invention a donc pour but de palier les inconvénients des agencements précités et de proposer un agencement de sièges, notamment pour aéronef particulièrement compact et léger, tout en répondant à un besoin de confort des passagers.

L'invention a donc pour objet un agencement de sièges tel que défini dans la revendication 1, notamment pour aéronef, comprenant au moins deux rangées comprenant chacun un premier et un deuxième sièges orientés dans la même direction et comprenant une assise et un dossier couplé à l'assise et mobile par rapport à l'assise entre une position inclinée dans laquelle le dossier est incliné par rapport à l'assise et une position allongée dans laquelle le dossier est sensiblement dans le même plan que l'assise. Les rangées de sièges s'étendent selon un premier axe parallèle à un axe longitudinal.

Les deux sièges d'une même rangée sont alignés et disposés côtes à côtes sur un même axe transversal perpendiculaire à l'axe longitudinal, de sorte à de ne pas être décalés axialement l'un de l'autre le long de l'axe de la rangée de sièges.

Ainsi, dans la même position, les sièges d'une même rangée ne s'étendent pas au-delà l'un par rapport à l'autre.

Le premier siège s'étendant selon un deuxième axe parallèle au premier axe.

Le deuxième siège s'étend selon un troisième axe incliné selon un angle avec ledit premier axe.

Ledit premier siège est disposé dans une enveloppe délimitant un premier logement de réception dudit premier siège et un deuxième logement de réception du deuxième siège adjacent audit premier logement et situé sur le même axe transversal que le premier logement, le deuxième logement étant séparé transversalement dudit premier logement par une paroi de séparation s'étendant selon un troisième axe incliné par rapport au premier axe.

L'agencement comprend en outre deux accoudoirs centraux disposés respectivement de part et d'autre de la paroi de séparation et associé chacun à un siège. Un plateau est fixé sur chacun des accoudoirs centraux. Chaque plateau est mobile entre une position rangée dans laquelle le plateau est à l'intérieur dudit accoudoir central associé et une position déployée dans laquelle le plateau s'étend dans un plan sensiblement horizontal à l'avant du siège correspondant.

Dans la position allongée, chaque siège peut avoir une longueur comprise entre 175cm et 205cm, par exemple entre 177.8cm et 203.2cm.

Ainsi, l'agencement de sièges permet un accès aisé au siège fenêtre depuis le couloir, tout en garantissant une intimité des passagers et un espace pour les passagers le plus grand possible.

L'angle formé entre la paroi de séparation et l'axe longitudinal est compris entre 2° et 10°, par exemple égal à 5°.

La paroi de séparation peut comprendre une cloison centrale de séparation mobile en translation dans ladite paroi selon l'axe de ladite paroi entre une position rétractée, dans laquelle la cloison est rétractée dans la paroi pour laisser libre une ouverture entre les deux logements d'une même rangée et une position fermée, dans laquelle la cloison obstrue l'ouverture, afin de conférer une intimité entre les passagers.

L'enveloppe peut être formée par un ensemble de parois fines.

Selon un mode de réalisation, l'agencement de sièges comprend au moins deux rangées d'au moins un premier siège, les premiers sièges étant orientés dans la même direction.

Avantageusement, l'agencement comprend un organe de retenue des membres inférieurs du passager du siège de la rangée arrière fixé sur une paroi arrière de l'enveloppe de la rangée amont.

L'agencement de sièges comprend au moins deux rangées comprenant chacune un premier et un deuxième siège, lesdits sièges étant orientés dans la même direction et les deux sièges d'une même rangée sont alignés et disposés côtes à côtes sur un même axe et le deuxième logement délimitant un espace de réception du deuxième siège.

En variante, on pourrait prévoir un nombre différent de rangées de sièges.

Avantageusement, le deuxième siège s'étend selon un axe dirigé vers l'intérieur et incliné selon un angle avec l'axe parallèle à un axe longitudinal.

Avantageusement, le deuxième siège est parallèle avec l'axe de la paroi de séparation.

Avantageusement, l'enveloppe comprend une paroi amont reliée à l'amont de la paroi centrale et une paroi arrière reliée à l'arrière de la paroi centrale, chaque paroi amont étant disposée en amont du deuxième siège de la rangée correspondante tout en laissant subsister avec ledit siège, un premier passage pour accéder audit siège, par exemple directement depuis un couloir. Le premier passage a, par exemple, une largeur comprise entre 35 cm et 65cm, par exemple entre 38.1 cm et 63.5cm.

Par exemple, la paroi amont d'une coque d'une rangée arrière délimite avec l'enveloppe d'une rangée amont un deuxième passage pour accéder au premier siège de la rangée arrière directement depuis un couloir. Ainsi, il est possible d'accéder directement au siège fenêtre depuis le couloir central par un couloir dédié. Le deuxième passage a une largeur comprise entre 20cm et 25cm, par exemple égale à 22.86 cm. On pourrait prévoir que le deuxième passage soit fermé par une cloison mobile, tel que par exemple une porte, par exemple montée dans la coque.

Avantageusement, l'agencement comprend un premier organe de retenue des membres inférieurs du passager du premier siège de la rangée arrière fixé sur la paroi arrière de l'enveloppe de la rangée amont et un deuxième organe de retenue des membres inférieurs du passager du premier siège de la rangée amont fixé sur la paroi amont de l'enveloppe de la rangée amont.

Les organes de retenue des membres inférieurs sont distincts du siège et destiné à supporter les pieds d'un passager dans la position allongée. L'organe de retenue présente, par exemple, une longueur comprise entre 50cm et 105cm, par exemple entre 50.8cm et 101.6cm et une hauteur comprise entre 25cm et 55cm, par exemple entre 25.4cm et 50.8cm.

Selon un deuxième aspect, l'invention concerne un aéronef selon la revendication 10, s'étendant selon un axe longitudinal comprenant un agencement de sièges comprenant au moins deux rangées comprenant chacune un premier et un deuxième siège orientés dans la même direction et comprenant chacun une assise et un dossier couplé à l'assise et mobile par rapport à l'assise entre une position inclinée dans laquelle le dossier est incliné par rapport à l'assise et une position allongée dans laquelle le dossier est sensiblement dans le même plan que l'assise.

Les rangées s'étendent selon un premier axe parallèle à l'axe longitudinal, le premier siège s'étendant selon un deuxième axe parallèle à l'axe, et le deuxième siège s'étendant selon un troisième axe incliné selon un angle avec ledit premier axe.

Les deux sièges d'une même rangée sont alignés et disposés côtes à côtes sur un même axe transversal perpendiculaire au premier axe, le premier siège étant disposé dans une enveloppe délimitant un premier logement de réception dudit premier siège et un deuxième logement de réception du deuxième siège adjacent audit premier logement et situé sur le même axe transversal que le premier logement, le deuxième logement étant séparé transversalement dudit premier logement par une paroi de séparation s'étendant selon un quatrième axe incliné par rapport au premier axe.

L'agencement comprend deux accoudoirs centraux disposés respectivement de part et d'autre de la paroi de séparation et associé chacun à un siège, un plateau étant fixé sur chacun des accoudoirs centraux et mobile entre une position rangée dans laquelle le plateau est à l'intérieur dudit accoudoir central associé et une position déployée dans laquelle le plateau s'étend dans un plan sensiblement horizontal à l'avant du siège correspondant.

Avantageusement, l'enveloppe comprend une paroi amont reliée à l'amont de la paroi centrale et une paroi arrière reliée à l'arrière de la paroi centrale, chaque paroi amont étant disposée en amont du deuxième siège de la rangée correspondante tout en laissant subsister avec ledit siège, un premier passage pour accéder audit siège et la paroi amont d'une enveloppe d'une rangée arrière délimitant avec l'enveloppe d'une rangée amont un deuxième passage pour accéder au premier siège de la rangée arrière.

### Brève description des dessins

D'autres buts, caractéristiques et avantages de l'invention apparaîtront à la lecture de la description suivante, donnée uniquement à titre d'exemple non limitatif, et faite en référence aux dessins indexés sur lesquels :
[Fig 1] illustre schématiquement une vue de dessus d'un agencement de sièges notamment d'un aéronef selon un mode de réalisation de l'invention ; et
[Fig 2] est une vue en perspective de l'agencement de sièges selon la figure 1.

Dans la suite de la description, les termes « amont » et « aval » sont définis par rapport au sens de déplacement de l'aéronef. Les termes « intérieur » et « extérieur » sont définis par rapport à une cloison extérieure de l'aéronef, l'intérieur étant plus proche du centre de l'aéronef que l'extérieur.

Dans la suite de la description, on considère une base orthonormée X, Y, Z, avec Z correspondant à un axe d'élévation représentant la direction verticale, X la direction transversale de l'intérieur vers l'extérieur de l'aéronef, perpendiculaire à l'axe vertical Z et Y, la direction longitudinale de l'avant vers l'arrière de l'aéronef, perpendiculaire aux axes X et Z.

### Exposé détaillé d'au moins un mode de réalisation

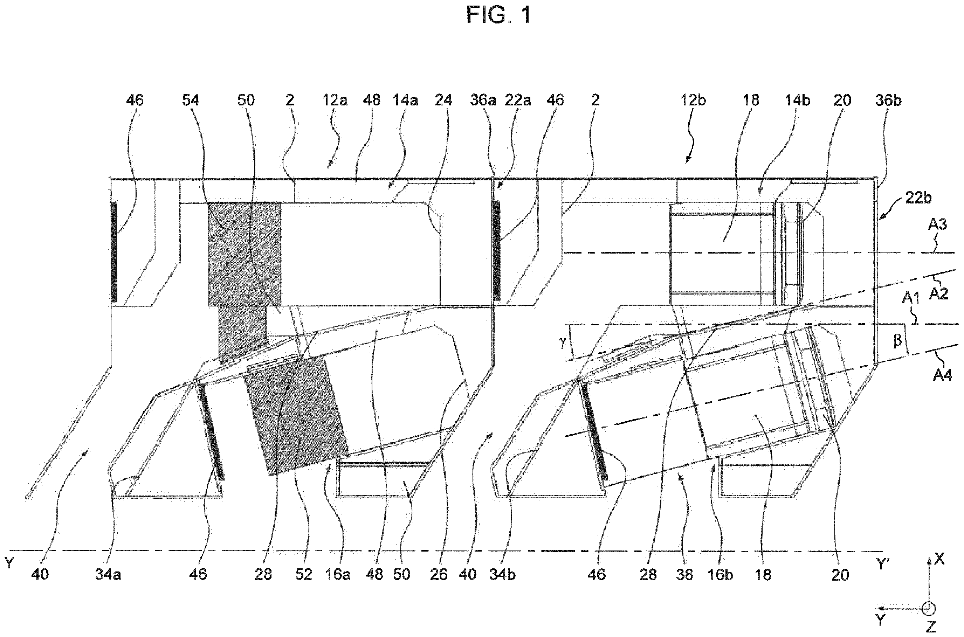

Sur la figure 1 est représenté un agencement 10 de sièges notamment pour un aéronef.

L'agencement de sièges comprend deux rangées 12a, 12b de sièges adjacents 14a, 16a, 14b, 16b, à savoir un siège dit « fenêtre » 14a, à proximité d'une fenêtre 2 et un siège dit « couloir » 16a, 16b à proximité d'un couloir 4 s'étendant selon un axe longitudinal Y-Y'. Les rangées 12a, 12b s'étendent selon un axe parallèle à l'axe longitudinal Y-Y'. Les sièges 14a, 16a et 14b, 16b d'une même rangée 12a ou 12b sont alignés et disposés côtes à côtes sur le même axe parallèle à l'axe transversal X.

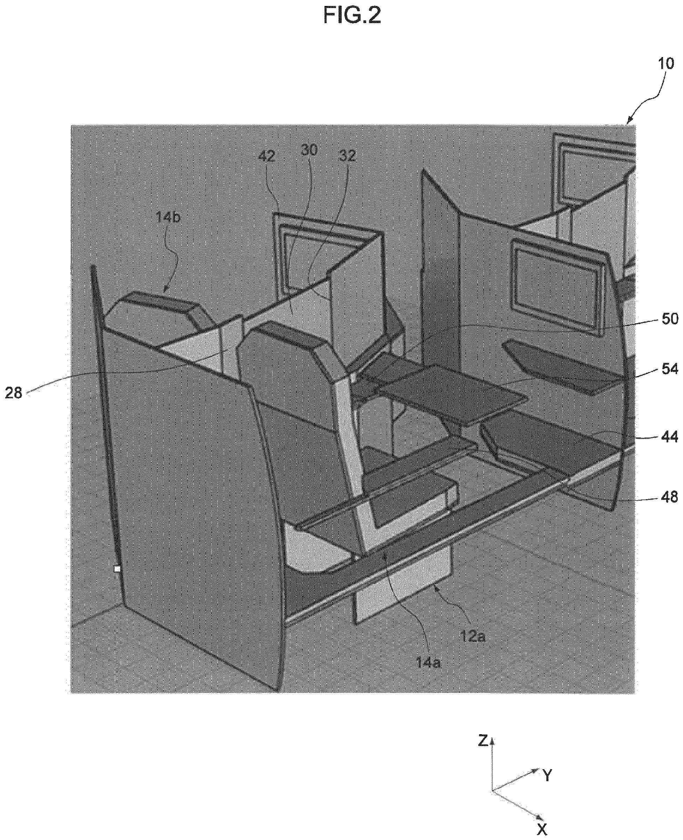

En variante, on pourrait prévoir un nombre différent de rangées de sièges, tel que visible par exemple sur la figure 2.

Tel qu'illustré, tous les sièges sont dirigés dans une même direction, ici vers l'avant de l'aéronef.

Chaque siège 14a, 16a, 14b, 16b comprend une assise 18 et un dossier 20 couplé à l'assise 18 et mobile par rapport à l'assise entre une position inclinée dans laquelle le dossier est incliné par rapport à l'assise et une position allongée dans laquelle le dossier est sensiblement dans le même plan que l'assise.

Dans la position allongée, chaque siège peut avoir une longueur comprise entre 175cm et 205cm, par exemple entre 177.8cm et 203.2cm.

Chaque siège fenêtre 14a, 14b s'étend selon un axe A3 dirigé vers l'extérieur et parallèle à l'axe longitudinal Y-Y'.

Chaque siège couloir 16a, 16b s'étend selon un axe A4 dirigé vers l'intérieur et formant un angle P positif avec l'axe A1 parallèle à l'axe longitudinal Y-Y'.

On entend par « angle positif », lorsque la rotation est anti-horaire.

Tel qu'illustré, l'agencement de sièges 10 comprend une enveloppe 22a, 22b formée de plaques de parois fines dans laquelle sont disposés une paire de sièges, à savoir un siège fenêtre et un siège couloir.

Chaque enveloppe 22a, 22b délimite un premier logement 24 délimitant un espace de réception du siège fenêtre 14a, 14b et un deuxième logement 26 délimitant un espace de réception du siège couloir 16a, 16b.

Les logements 24, 26 sont séparés par une paroi de séparation 28 centrale. La paroi de séparation 28 s'étend selon un axe A2 formant un angle γ avec l'axe A1 parallèle à l'axe longitudinal. Par exemple, l'angle γ est compris entre 2° et 10°, par exemple égal à 5°.

L'inclinaison de la paroi de séparation 28 permet de procurer un espace plus important pour les passagers.

Les sièges couloir 16a, 16b s'étendent selon un axe A4 parallèle à l'axe A2 de la paroi de séparation 28.

La paroi de séparation centrale 28 comprend une cloison centrale de séparation 30 mobile en translation dans ladite paroi 28 selon l'axe A2 entre une position rétractée, dans laquelle la cloison 30 est rétractée dans la paroi 28 pour laisser libre une ouverture 32 entre les deux sièges d'une même rangée et une position fermée, visible sur la figure 2, dans laquelle la cloison 28 obstrue l'ouverture 32, afin de conférer une intimité entre les passagers.

Chaque enveloppe 22a, 22b comprend en outre une paroi amont 34a, 34b reliée à l'amont de la paroi centrale 28 et une paroi arrière 36a, 36b reliée à l'arrière de la paroi centrale 28.

Chaque paroi amont 34a, 34b est disposée en amont du siège couloir 16a, 16b tout en laissant subsister avec ledit siège couloir 16a, 16b, un premier passage 38 pour accéder au siège couloir directement depuis le couloir 4. Le premier passage 38 a une largeur comprise entre 35 cm et 65cm, par exemple entre 38.1cm et 63.5cm.

La paroi amont 34b d'une enveloppe 22b d'une rangée arrière 12b délimite avec l'enveloppe 22a d'une rangée 12a amont un deuxième passage 40 pour accéder au siège fenêtre directement depuis le couloir 4. Ainsi, il est possible d'accéder directement au siège fenêtre depuis le couloir central 4 par un couloir dédié 40. Le deuxième passage 40 a une largeur comprise entre 20cm et 25cm, par exemple égale à 22.86 cm. On pourrait prévoir que le deuxième passage 40 soit fermé par une cloison mobile, tel que par exemple une porte, par exemple montée dans l'enveloppe 22a, 22b.

Tel qu'illustré, l'agencement 10 comprend un organe 44 de retenue des membres inférieurs, par exemple une tablette montée en face de chaque siège. L'organe 44 de retenue des membres inférieurs du passager du siège fenêtre 14b de la rangée arrière 12b est fixé sur la paroi arrière 36a de l'enveloppe 22a de la rangée amont 12a, tandis que l'organe 44 de retenue des membres inférieurs du passage du siège fenêtre 14a de la rangée 12a amont est fixé sur la paroi amont 34a de l'enveloppe 22a de la rangée amont 12a.

L'organe 44 est distinct du siège et destiné à supporter les pieds d'un passager dans la position allongée. L'organe 44 présente par exemple une longueur comprise entre 50cm et 105cm, par exemple entre 50.8cm et 101.6cm et une hauteur comprise entre 25cm et 55cm, par exemple entre 25.4cm et 50.8cm.

Tel qu'illustré, l'agencement 10 comprend un organe d'affichage 46 associé à chaque siège. L'organe d'affichage 46 du siège fenêtre 14b de la rangée arrière 12b est fixé sur la paroi arrière 36a de l'enveloppe 22a de la rangée amont 12a, tandis que l'organe d'affichage 46 des membres inférieurs du passage du siège fenêtre 14a de la rangée 12a amont est fixé sur la paroi amont 34a de l'enveloppe 22a de la rangée amont 12a. L'organe d'affichage a, par exemple une longueur diagonale comprise entre 40cm et 70cm, par exemple entre 45.72cm et 60.96 cm.

L'agencement de sièges comprend un premier accoudoir 48 disposé à droite de chaque siège et un deuxième accoudoir 50 disposé à gauche de chaque siège. Le premier accoudoir 48 du siège couloir et le deuxième accoudoir 50 du siège fenêtre sont appelés accoudoirs centraux. Lesdits accoudoirs 48, 50 sont fixés sur l'enveloppe correspondante 22 et présentent une hauteur comprise entre 35cm et 80cm, par exemple entre 38.1cm et 76.2cm.

L'agencement de sièges comprend en outre un premier plateau mobile 52 fixé sur le premier accoudoir 48 du siège couloir 16a, 16b correspondant et mobile entre une position rangée dans laquelle le plateau est à l'intérieur de l'accoudoir et une position déployée dans laquelle le plateau s'étend dans un plan sensiblement horizontal à l'avant du siège couloir correspondant. L'agencement de sièges comprend en outre un deuxième plateau mobile 54 fixé sur le deuxième accoudoir 50 du siège fenêtre 14a, 14b correspondant et mobile entre une position rangée dans laquelle le plateau est à l'intérieur de l'accoudoir et une position déployée dans laquelle le plateau s'étend dans un plan sensiblement horizontal à l'avant du siège fenêtre correspondant.

La position déployée du deuxième plateau 54 est visible sur la figure 2.

La surface des plateaux est comprise entre 381cm² et 762cm².

On pourrait également prévoir une tablette fixe (non représentée) fixée sur la coque sous l'organe d'affichage.

En variante, on pourrait prévoir que chaque rangée 12a, 12b ne comprenne qu'un unique siège fenêtre 14a, 14b. Le logement 26 de la coque 22 est dépourvu de siège couloir, ce qui permet d'agrandir le passage 40 au siège fenêtre et d'utiliser le logement 26, par exemple comme espace de jeux pour les enfants.

Grâce à l'invention, l'agencement de sièges permet un accès aisé au siège fenêtre depuis le couloir, tout en garantissant une intimité des passagers et un espace pour les passagers le plus grand possible.

De plus, l'enveloppe étant particulièrement fine, l'encombrement et le poids d'un tel agencement est considérablement réduit.

## Revendications

1. Agencement de sièges, notamment pour aéronef, comprenant au moins deux rangées (12a, 12b) comprenant chacune un premier et un deuxième sièges (14a, 14b ; 16a, 16b) orientés dans la même direction et comprenant chacun une assise (18) et un dossier (20) couplé à l'assise (18) et mobile par rapport à l'assise entre une position inclinée dans laquelle le dossier est incliné par rapport à l'assise et une position allongée dans laquelle le dossier est sensiblement dans le même plan que l'assise, les rangées (12a, 12b) s'étendant selon un premier axe (A1) parallèle à un axe longitudinal (Y-Y'), le premier siège (14a, 14b) s'étendant selon un deuxième axe (A3) parallèle au premier axe (A1), et le deuxième siège (16a, 16b) s'étendant selon un troisième axe (A4) incliné selon un angle (β1) avec ledit premier axe (A1), **caractérisé en ce que** l'agencement de sièges comprend une enveloppe (22a, 22b) et une paroi de séparation (28) et **en ce que** les deux sièges d'une même rangée sont alignés et disposés côtes à côtes sur un même axe transversal perpendiculaire au premier axe (A1), le premier siège (14a, 14b) étant disposé dans l' enveloppe (22a, 22b) délimitant un premier logement (24) de réception dudit premier siège (14a, 14b) et un deuxième logement (26) de réception du deuxième siège (16a, 16b) adjacent audit premier logement et situé sur le même axe transversal que le premier logement, le deuxième logement (26) étant séparé transversalement dudit premier logement par la paroi de séparation (28) s'étendant selon un quatrième axe (A2) incliné par rapport au premier axe (A1), et **en ce qu'**il comprend deux accoudoirs centraux (48, 50) disposés respectivement de part et d'autre de la paroi de séparation (28) et associé chacun à un siège, un plateau (52, 54) étant fixé sur chacun des accoudoirs centraux (48, 50) et mobile entre une position rangée dans laquelle le plateau est à l'intérieur dudit accoudoir central associé (48, 50) et une position déployée dans laquelle le plateau s'étend dans un plan sensiblement horizontal à l'avant du siège (14a, 14b ; 16a, 16b) correspondant.

2. Agencement de sièges selon la revendication 1, dans lequel l'angle (γ) formé entre la paroi de séparation (28) et l'axe longitudinal (Y-Y') est compris entre 2° et 10°, par exemple égal à 5°.

3. Agencement de sièges selon l'une quelconque des revendications précédentes, dans lequel la paroi de séparation (28) comprend une cloison centrale de séparation (30) mobile en translation dans ladite paroi (28) selon l'axe (A2) de ladite paroi entre une position rétractée, dans laquelle la cloison (30) est rétractée dans la paroi (28) pour laisser libre une ouverture (32) entre les deux logements (224, 26) d'une même rangée et une position fermée, dans laquelle la cloison (28) obstrue l'ouverture (32).

4. Agencement de sièges selon l'une quelconque des revendications précédentes, dans lequel l'enveloppe (22a, 22b) est formée par un ensemble de parois fines (34a, 28, 36a : 34b, 28, 36b).

5. Agencement de sièges selon l'une quelconque des revendications précédentes, dans lequel le deuxième siège (16a, 16b) s'étend selon un axe dirigé vers l'intérieur et incliné selon un angle (β) avec le premier axe (A1) parallèle à un axe longitudinal (Y-Y').

6. Agencement de sièges selon l'une quelconque des revendications précédentes, dans lequel le deuxième siège (16a, 16b) est parallèle à l'axe (A2) de la paroi de séparation (28).

7. Agencement de sièges selon l'une quelconque des revendications précédentes, dans lequel l'enveloppe (22a, 22b) comprend une paroi amont (34a, 34b) reliée à l'amont de la paroi centrale (28) et une paroi arrière (36a, 36b) reliée à l'arrière de la paroi centrale (28), chaque paroi amont (34a, 34b) étant disposée en amont du deuxième siège (16a) de la rangée (12a) correspondante tout en laissant subsister avec ledit siège, un premier passage (38) pour accéder audit siège (16a).

8. Agencement de sièges selon la revendication 7, dans lequel la paroi amont (34b) d'une enveloppe (22b) d'une rangée arrière (12b) délimite avec l'enveloppe (22a) d'une rangée (12a) amont un deuxième passage (40) pour accéder au premier siège (14b) de la rangée arrière (12b).

9. Agencement de sièges selon la revendication 7 ou 8, comprenant un premier organe (44) de retenue des membres inférieurs du passager du premier siège (14b) de la rangée (12b) arrière fixé sur la paroi arrière (36a) de l'enveloppe (22a) de la rangée amont (12a) et un deuxième organe (44) de retenue des membres inférieurs du passager du premier siège (14b) de la rangée (12a) amont fixé sur la paroi amont (34a) de l'enveloppe (22a) de la rangée amont (12a).

10. Aéronef s'étendant selon un axe longitudinal (Y-Y') comprenant un agencement de sièges selon la revendication 1.

11. Aéronef selon la revendication 10, dans lequel l'enveloppe (22a, 22b) comprend une paroi amont (34a, 34b) reliée à l'amont de la paroi centrale (28) et une paroi arrière (36a, 36b) reliée à l'arrière de la paroi centrale (28), chaque paroi amont (34a, 34b) étant disposée en amont du deuxième siège (16a) de la rangée (12a) correspondante tout en laissant subsister avec ledit siège, un premier passage (38) pour accéder audit siège (16a) et la paroi amont (34b) d'une enveloppe (22b) d'une rangée arrière (12b) délimitant avec l'enveloppe (22a) d'une rangée (12a) amont un deuxième passage (40) pour accéder au premier siège (14b) de la rangée arrière (12b).

## Patentansprüche

1. Sitzanordnung, insbesondere für Flugzeuge, umfassend mindestens zwei Reihen (12a, 12b), die jeweils einen ersten und einen zweiten Sitz (14a, 14b; 16a, 16b) umfassen, die in die gleiche Richtung ausgerichtet sind und jeweils eine Sitzfläche (18) und eine Rückenlehne (20), die mit der Sitzfläche (18) gekoppelt und in Bezug auf die Sitzfläche zwischen einer geneigten Position, in der die Rückenlehne in Bezug auf die Sitzfläche geneigt ist, und einer liegenden Position, in der sich die Rückenlehne im Wesentlichen in derselben Ebene wie die Sitzfläche befindet, beweglich ist, umfasst, wobei sich die Reihen (12a, 12b) entlang einer ersten Achse (A1) erstrecken, die parallel zu einer Längsachse (Y-Y') liegt, wobei sich der erste Sitz (14a, 14b) entlang einer zweiten Achse (A3) erstreckt, die parallel zur ersten Achse (A1) liegt, und sich der zweite Sitz (16a, 16b) entlang einer dritten Achse (A4) erstreckt, die in einem Winkel (β1) zur ersten Achse (A1) geneigt ist, **dadurch gekennzeichnet, dass** die Sitzanordnung eine Schale (22a, 22b) und eine Trennwand (28) umfasst, und dadurch, dass die beiden Sitze derselben Reihe nebeneinander auf einer einzigen Querachse ausgerichtet und angeordnet sind, die senkrecht zur ersten Achse (A1) verläuft, wobei der erste Sitz (14a, 14b) in der Schale (22a, 22b) angeordnet ist, die ein erstes Gehäuse (24) zur Aufnahme des ersten Sitzes (14a, 14b) und ein zweites Gehäuse (26) zur Aufnahme des zweiten Sitzes (16a, 16b), das an das erste Gehäuse angrenzt und sich auf der gleichen Querachse wie das erste Gehäuse befindet, definiert, wobei das zweite Gehäuse (26) in Querrichtung vom ersten Gehäuse durch die Trennwand (28) getrennt ist, die sich entlang einer vierten Achse (A2) erstreckt, die in Bezug auf die erste Achse (A1) geneigt ist, und dadurch, dass sie zwei mittlere Armlehnen (48, 50) umfasst, die jeweils auf beiden Seiten der Trennwand (28) angeordnet und jeweils mit einem Sitz verbunden sind, wobei eine Tischplatte (52, 54) an jeder der mittleren Armlehnen (48, 50) befestigt und zwischen einer verstauten Position, in der sich die Tischplatte im Inneren der verbundenen mittleren Armlehne (48, 50) befindet, und einer ausgezogenen Position, in der sich die Tischplatte in einer im Wesentlichen horizontalen Ebene an der Vorderseite des entsprechenden Sitzes (14a, 14b; 16a, 16b) erstreckt, beweglich ist.

2. Sitzanordnung nach Anspruch 1, wobei der Winkel (γ), der zwischen der Trennwand (28) und der Längsachse (Y-Y') gebildet wird, zwischen 2° und 10° beträgt, zum Beispiel gleich 5° ist.

3. Sitzanordnung nach einem der vorhergehenden Ansprüche, wobei die Trennwand (28) eine zentrale Abtrennung (30) umfasst, die in der Wand (28) entlang der Achse (A2) der Wand zwischen einer zurückgezogenen Position, in der die Abtrennung (30) in die Wand (28) zurückgezogen wird, um eine Öffnung (32) zwischen den beiden Gehäusen (224, 26) derselben Reihe freizulassen, und einer geschlossenen Position, in der die Abtrennung (28) die Öffnung (32) versperrt, verschiebbar ist.

4. Sitzanordnung nach einem der vorhergehenden Ansprüche, wobei die Schale (22a, 22b) durch eine Gruppe dünner Wände (34a, 28, 36a: 34b, 28, 36b) gebildet wird.

5. Sitzanordnung nach einem der vorhergehenden Ansprüche, wobei sich der zweite Sitz (16a, 16b) entlang einer Achse erstreckt, die nach innen gerichtet und in einem Winkel (β) zur ersten Achse (A1), die parallel zu einer Längsachse (Y-Y') liegt, geneigt ist.

6. Sitzanordnung nach einem der vorhergehenden Ansprüche, wobei der zweite Sitz (16a, 16b) parallel zur Achse (A2) der Trennwand (28) ist.

7. Sitzanordnung nach einem der vorhergehenden Ansprüche, wobei die Schale (22a, 22b) eine vordere Wand (34a, 34b), die mit der Vorderseite der mittleren Wand (28) verbunden ist, und eine hintere Wand (36a, 36b) umfasst, die mit der Rückseite der mittleren Wand (28) verbunden ist, wobei jede vordere Wand (34a, 34b) vor dem zweiten Sitz (16a) der entsprechenden Reihe (12a) angeordnet ist, während dem Sitz ein erster Durchgang (38) bestehen bleibt, um zum Sitz (16a) zu gelangen.

8. Sitzanordnung nach Anspruch 7, wobei die vordere Wand (34b) einer Schale (22b) einer hinteren Reihe (12b) mit der Schale (22a) einer vorderen Reihe (12a) einen zweiten Durchgang (40) definiert, um zum ersten Sitz (14b) der hinteren Reihe (12b) zu gelangen.

9. Sitzanordnung nach Anspruch 7 oder 8, umfassend ein erstes Rückhalteelement (44) für die Beine des Passagiers auf dem ersten Sitz (14b) der hinteren Reihe (12b), das an der hinteren Wand (36a) der Schale (22a) der vorderen Reihe (12a) befestigt ist, und ein zweites Rückhalteelement (44) für die Beine des Passagiers auf dem ersten Sitz (14b) der vorderen Reihe (12a), das an der vorderen Wand (34a) der Schale (22a) der vorderen Reihe (12a) befestigt ist.

10. Flugzeug, das sich entlang einer Längsachse (Y-Y') erstreckt und eine Sitzanordnung nach Anspruch 1 umfasst.

11. Flugzeug nach Anspruch 10, wobei die Schale (22a, 22b) eine vordere Wand (34a, 34b), die mit der Vorderseite der mittleren Wand (28) verbundenen ist, und eine hintere Wand (36a, 36b) umfasst, die mit der Rückseite der mittleren Wand (28) verbunden ist, wobei jede vordere Wand (34a, 34b) vor dem zweiten Sitz (16a) der entsprechenden Reihe (12a) angeordnet ist, während dem Sitz ein erster Durchgang (38) bestehen bleibt, um zum Sitz (16a) zu gelangen, und die vordere Wand (34b) einer Schale (22b) einer hinteren Reihe (12b) mit der Schale (22a) einer vorderen Reihe (12a) einen zweiten Durchgang (40) definiert, um zum ersten Sitz (14b) der hinteren Reihe (12b) zu gelangen.

## Claims

1. A seat arrangement, in particular for aircraft, comprising at least two rows (12a, 12b) each comprising a first and a second seat (14a, 14b; 16a, 16b) oriented in the same direction and each comprising a seat portion (18) and a backrest (20) coupled to the seat portion (18) and movable relative to the seat portion between an inclined position wherein the backrest is inclined relative to the seat portion and an extended position wherein the backrest is substantially in the same plane as the seat portion, the rows (12a, 12b) extending along a first axis (Al) configured to be parallel to a longitudinal axis (Y-Y'), the first seat (14a, 14b) extending along a second axis (A3) parallel to the first axis (Al), and the second seat (16a, 16b) extending along a third axis (A4) inclined at an angle (β1) with said first axis (Al), **characterised in that** the seat arrangement comprises an envelope (22a, 22b) and a separation wall (28) and **in that** the two seats of the same row are aligned and disposed side by side on the same transverse axis perpendicular to the first axis (Al), the first seat (14a, 14b) being disposed in the envelope (22a, 22b) delimiting a first housing (24) for receiving said first seat (14a, 14b) and a second housing (26) for receiving the second seat (16a, 16b) adjacent to said first housing and located on the same transverse axis as the first housing, the second housing (26) being separated transversely from said first housing by the separation wall (28) extending along a fourth axis (A2) inclined relative to the first axis (Al), and **in that** it comprises two central armrests (48, 50) disposed respectively on either side of the separation wall (28) and each associated with a seat, a tray (52, 54) being fixed on each of the central armrests (48, 50) and movable between a stowed position wherein the tray is inside said associated central armrest (48, 50) and a deployed position wherein the tray extends in a substantially horizontal plane at the front of the corresponding seat (14a, 14b; 16a, 16b).

2. The seat arrangement according to claim 1, wherein the angle (γ) formed between the separation wall (28) and the longitudinal axis (Y-Y') is comprised between 2° and 10°, for example equal to 5°.

3. The seat arrangement according to any one of the preceding claims, wherein the separation wall (28) comprises a central separation partition (30) movable in translation in said wall (28) along the axis (A2) of said wall between a retracted position, wherein the partition (30) is retracted into the wall (28) to leave a free opening (32) between the two housings (224, 26) of the same row and a closed position, wherein the partition (28) obstructs the opening (32).

4. The seat arrangement according to any one of the preceding claims, wherein the envelope (22a, 22b) is formed by a set of thin walls (34a, 28, 36a: 34b, 28, 36b).

5. The seat arrangement according to any one of the preceding claims, wherein the second seat (16a, 16b) extends along an axis directed inwards and inclined at an angle (β) with the first axis (Al) parallel to a longitudinal axis (Y-Y').

6. The seat arrangement according to any one of the preceding claims, wherein the second seat (16a, 16b) is parallel to the axis (A2) of the separation wall (28).

7. The seat arrangement according to any one of the preceding claims, wherein the envelope (22a, 22b) comprises an upstream wall (34a, 34b) connected to the upstream of the central wall (28) and a rear wall (36a, 36b) connected to the rear of the central wall (28), each upstream wall (34a, 34b) being disposed upstream of the second seat (16a) of the corresponding row (12a) while leaving a first passage (38) with said seat to access said seat (16a).

8. The seat arrangement according to claim 7, wherein the upstream wall (34b) of an envelope (22b) of a rear row (12b) delimits with the envelope (22a) of an upstream row (12a) a second passage (40) to access the first seat (14b) of the rear row (12b).

9. The seat arrangement according to claim 7 or 8, comprising a first member (44) for retaining the legs of the passenger of the first seat (14b) of the rear row (12b) fixed on the rear wall (36a) of the envelope (22a) of the upstream row (12a) and a second member (44) for retaining the legs of the passenger of the first seat (14b) of the upstream row (12a) fixed on the upstream wall (34a) of the envelope (22a) of the upstream row (12a).

10. An aircraft extending along a longitudinal axis (Y-Y') comprising a seat arrangement according to claim 1.

11. The aircraft according to claim 10, wherein the envelope (22a, 22b) comprises an upstream wall (34a, 34b) connected to the upstream of the central wall (28) and a rear wall (36a, 36b) connected at the rear of the central wall (28), each upstream wall (34a, 34b) being disposed upstream of the second seat (16a) of the corresponding row (12a) while leaving a first passage (38) with said seat to access said seat (16a) and the upstream wall (34b) of an envelope (22b) of a rear row (12b) delimiting with the envelope (22a) of an upstream row (12a) a second passage (40) to access the first seat (14b) of the rear row (12b).
